# EUROPÄISCHE PATENTSCHRIFT

(11) **EP 1 735 899 B1**
(45) Veröffentlichungstag und Bekanntmachung des Hinweises auf die Patenterteilung: **01.10.2008**
(21) Anmeldenummer: 05738842.3
(22) Anmeldetag: 05.04.2005
(51) Int. Cl.: H02K 51/00, F16H 3/72, B60N 2/225, F16H 13/08, F16H 13/10

(54) **ANTRIEBSEINHEIT EINES EINSTELLERS IN EINEM FAHRZEUG**
DRIVE UNIT OF AN ADJUSTING DEVICE IN A VEHICLE
UNITE D'ENTRAINEMENT D'UN DISPOSITIF DE REGLAGE INSTALLE DANS UN VEHICULE

(30) Priorität: 15.04.2004 DE 102004019469
(43) Veröffentlichungstag der Anmeldung: 27.12.2006
(73) Patentinhaber: KEIPER GmbH & Co. KG, 67657 Kaiserslautern (DE)
(72) Erfinder: SCHÜLER, Rolf, 42579 Heiligenhaus (DE); BERRES, Michael, 51375 Leverkusen (DE); BOSSMANNS, Bernd, 40699 Erkrath (DE); KALMUS, Karsten, 44799 Bochum (DE); SCHUHN, Christoph, 40468 Düsseldorf (DE); VOSS, Heinz, 51375 Leverkusen (DE)
(74) Vertreter: Patentanwälte Hosenthien-Held und Dr. Held
(86) Internationale Anmeldenummer: PCT/DE2005/000633
(87) Internationale Veröffentlichungsnummer: WO 2005/101622

(56) Entgegenhaltungen:
- EP-A- 0 429 308
- EP-A- 1 279 545
- DE-A1- 19 962 225
- DE-C1- 4 341 112
- FR-A- 2 829 813

## Beschreibung

Die Erfindung betrifft eine Antriebseinheit mit den Merkmalen des Oberbegriffs des Anspruches 1.

Derartige Antriebseinheiten können für zahlreiche Zwecke eingesetzt werden, beispielsweise für Fensterheber, Außenspiegeleinsteller, Schiebedächer oder dergleichen. In der DE 199 62 225 A1 ist eine Antriebseinheit der eingangs genannten Art für die Neigungseinstellung der Rückenlehne eines Fahrzeugsitzes bekannt. Für die verwendeten Antriebseinheiten sind sowohl bürstenkommutierte als auch elektronisch kommutierte Motoren bekannt. Mittels der Getriebestufe kann die Drehzahl herabgesetzt und zugleich das abgegebene Drehmoment erhöht werden.

Der Erfindung liegt die Aufgabe zu Grunde, eine Antriebseinheit der eingangs genannten Art zu verbessern. Diese Aufgabe wird erfindungsgemäß durch eine Antriebseinheit mit den Merkmalen des Anspruches 1 gelöst. Vorteilhafte Ausgestaltungen sind Gegenstand der Unteransprüche.

Durch eine Ausbildung der Getriebestufe als Differentialgetriebe, welches unter Ausnutzung zweier unterschiedlicher Drehzahlen und/oder Drehrichtungen eine Bewegung eines Abtriebs um eine Achse erzeugt, können besonders kleine Relativbewegungen erzeugt werden, die eine geringe Drehzahl am Abtrieb ermöglichen. Dabei können die zwei unterschiedlichen Drehzahlen und/oder Drehrichtungen vom Motor in die Getriebestufe geleitet werden oder von der Getriebestufe selber erzeugt und durch Festlegen eines Bauteils mit einer solchen Drehzahl am anderen Bauteil als Abtrieb abgegriffen werden. Die Getriebestufe ist in einer Reibrad-Ausführung mit hohlen und/oder massiven Rollen verwirklicht, welche einfach herzustellen ist, mit hohlen Rollen auch gewichtsreduzierend ist, und zugleich als Lager für einen Rotor des Motors dienen kann.

Die Getriebestufe ist vorzugsweise an einen elektronisch kommutierten Motor angeschlossen, kann aber auch mit einem bürstenkommutierten Motor verbunden sein.

Elektronisch kommutierte, bürstenlose Motoren bieten einen hohen elektromechanischen Wirkungsgrad bei gleichzeitig geringem Bauraum und niedrigem Geräuschniveau. Mehrere Motoren können mit der zugehörigen Elektronik ohne wesentlichen Zusatzaufwand in ihrer Drehzahl oder Position miteinander synchronisiert werden. Die Art der Kommutierung bietet die Möglichkeit, einen Blockierzustand zu erkennen, ein maximal zulässiges Blockiermoment elektrisch zu definieren und die Temperatur zu überwachen, und damit eine gegenüber Bürstenmotoren höhere Energiedichte des elektromagnetischen Wandlers zu realisieren, was eine deutliche Reduktion von Bauraum und Gewicht erlaubt. Die Integration der Steuerelektronik in den Motor bietet Vorteile bei der Erkennung von Blocksituationen, der Auswertung vorhandener Sensoren und der Abstimmung zwischen Elektronikfunktion und anzutreibender Vorrichtung, beispielsweise bei der Aufnahme oder Programmierung von Parametern des Motorverhaltens.

Mit zwei Rotoren, die mit unterschiedlicher Drehzahl und/oder Drehrichtung rotieren, kann eine Relativbewegung erzeugt werden, die gegenüber einem Absolutwert der Drehzahl gering ist und von der Getriebestufe weiter untersetzt werden kann, um das abtriebsseitige Drehmoment zu erhöhen. Die unterschiedliche Drehzahl und/oder Drehrichtung der Rotoren wird auf konstruktiv einfache Weise vorzugsweise dadurch erreicht, dass die Rotoren untereinander eine unterschiedliche Anzahl von Polen aufweisen, die wiederum vorzugsweise von der Anzahl der Statorpole verschieden ist, so dass auch die Drehzahl der Rotoren von der Drehzahl des Magnetfelds des Stators abweicht.

Ein Verhältnis der Statorpole zu den Polen des Rotors, das von 2:3 und 3:2 verschieden ist, ermöglicht Drehzahl- und/oder Drehrichtungsunterschiede, womit - beispielsweise mittels zweier Rotoren - eine kleine Relativbewegung erzeugt werden kann, die zu einer Drehzahluntersetzung mit gleichzeitiger Erhöhung des abtriebsseitigen Drehmomentes führt.

Für einen geräuscharmen oder -losen Lauf des Motors mit geringer Reibung, geringer Wärmeentwicklung und geringem Energieverbrauch ist vorzugsweise der Stator elektronisch kommutiert, während die Rotoren vorzugsweise Permanentmagneten als Pole tragen. Dabei trägt in Umfangsrichtung des Stators vorzugsweise genau jeder zweite Statorpol eine Spule, um den magnetischen Fluß über den benachbarten Statorpol zu schließen. Stator und Rotoren können bezüglich der zentralen Achse in radialer Abfolge oder axialer Abfolge (Scheibenläufer) angeordnet sein. Zur Erzeugung der unterschiedlichen Drehzahlen können die Pole von Stator und Rotoren sich beispielsweise um zwei unterscheiden.

Für ein Sperren eines von der Abtriebsseite eingeleiteten Drehmomentes kann beispielsweise vorgesehen sein, dass der Motor mit einem Motorritzel ein Zwischenrad antreibt, welches formschlüssig oder reibschlüssig sperrbar ist.

Vorzugsweise sind mehrere Motoren zu einem Multimotor zusammengefasst, welcher situationsangepasst unterschiedliche Leistungsanforderungen erfüllen kann und dabei bauraumsparend und ergonomisch günstig ist. In konstruktiv einfacher Weise sind beispielsweise die Motoren in parallelen Motorschächten eines gemeinsamen Motorträgers angeordnet, wobei ein gemeinsames Zwischenrad den Abtrieb des Multimotors bildet. Mit der Möglichkeit der modularen Leistungsdefinition können auch kurzfristig extrem hohe Leistungen abgerufen werden. Wenn beispielsweise die Motoren des Multimotors im Normalfall in Serie geschaltet sind, so können sie in einer besonderen Situation parallel geschaltet werden, um aufgrund der höheren Spannung eine höhere Leistung abzugeben. Eine solche Situation ist beispielsweise ein Crash oder ein bevorstehender Crash eines Fahrzeuges.

Der Motor ist vorzugsweise aus mehreren Motorvarianten auswählbar, in der radialen Ausführung beispielsweise ein Innenläufer-, ein Außenläufer- oder ein Doppelläufermotor. In Verbindung mit einer aus mehreren Getriebestufentypen auswählbaren Getriebestufe, wobei auch mehrere Getriebestufen hintereinander geschaltet sein können, steht ein modulares System zur Verfügung, das mit wenigen Modulen eine große Anzahl von Antriebseinheiten schafft, um die verschiedenen Anforderungen abzudecken.

Neben dem elektromechanischen Wirkungsgrad des Motors ist für den Gesamtwirkungsgrad der Antriebseinheit auch der Wirkungsgrad der Getriebestufe von Bedeutung, weshalb koaxiale, vollsymmetrische Getriebebauformen mit einer möglichst geringen Anzahl von Einzellagern, in Reibrad-Ausführung ohne jegliche Zusatzlagerung sondern vielmehr mit eigener Lagerfunktion, bevorzugt sind.

Die Getriebestufe kann als einstufiges Planeten-Differentialgetriebe mit einem oder mehreren Sonnenrädern, einem Satz vorzugsweise ungestufter Planetenrollen und einem oder mehreren Hohlrädern ausgebildet sein, welche konzentrisch zur zentralen Achse angeordnet sind, wobei die Sonnenräder bzw. Hohlräder bezüglich der Achse axial benachbart angeordnet sind. Unterschiedliche Elastizitäten und unterschiedliche Außendurchmesser der zwei Sonnenräder bzw. unterschiedliche Innendurchmesser der zwei Hohlräder führen zu geringen Drehzahldifferenzen.

Die besagten Drehzahldifferenzen können beispielsweise abgegriffen werden, indem von den zwei besagten benachbarten Getriebeelementen mit unterschiedlichem Durchmesser eines gehäusefest und eines mit dem Abtrieb verbunden ist.

Um einerseits eine Vorspannung zum Zusammenhalt und zur Zentrierung der Getriebestufe aufzubringen und andererseits Toleranzen auszugleichen, weisen das Hohlrad oder der Außenring vorzugsweise einen elastischen Metallring und ein den Metallring aufnehmendes Elastomerbett auf. Eine das Elastomerbett mit dem Metallring aufnehmende und axial sichernde Halterung ist vorzugsweise mit einer Glocke des als Hohlwelle ausgebildeten Abtriebs verbunden.

Mit einem Schaltgetriebe kann die Drehrichtung des Abtriebs wahlweise geschaltet werden, ohne die Drehrichtung des Motors ändern zu müssen. Dies vereinfacht die Elektronik für den Motor erheblich. Zum Schalten ist in einer einfach herzustellenden Ausführung vorzugsweise ein durch eine Schaltspule definierter Elektromagnet vorgesehen, der mit zwei einander abstoßenden Permanent-Haltemagneten zusammenwirkt, welche geometrisch mit zwei benachbarten, ähnlichen Getriebeelementen gekoppelt sind, um diese reibschlüssig oder formschlüssig festzustellen. Mit einem Schaltgetriebe kann auch zwischen zwei unterschiedlichen Getriebeübersetzungen ausgewählt werden.

Die Getriebestufe ist vorzugsweise aus mehreren Getriebestufentypen auswählbar. In Verbindung mit einem aus mehreren Motorvarianten auswählbaren Motor steht ein modulares System zur Verfugung, das mit wenigen Modulen eine große Anzahl von Antriebseinheiten schafft, um die verschiedenen Anforderungen abzudecken.

Die Antriebseinheit treibt einen im Fahrzeug vorgesehenen Einsteller an, der beispielsweise als Fensterheber, im Außenspiegel, am Schiebedach oder an einem Fahrzeugsitz verwendet wird. Dabei ist die Antriebseinheit vorzugsweise in ein lastaufnehmendes Getriebe integriert, wobei das lastaufnehmende Getriebe vorzugsweise einen Rotor direkt oder indirekt lagert. Der so ausgebildete Einsteller hat den Vorteil, dass gesonderte Übertragungselemente zwischen der Antriebs einheit und dem lastaufnehmenden Getriebe, beispielsweise einen schlechten Wirkungsgrad aufweisende Schneckengetriebe oder dergleichen, sowie gesonderte Lagerelemente für den Rotor entbehrlich sind. Wenn zudem eine durchgehend spielfreie Lagerung des Rotors über die Getriebestufe bis zu dem lastaufnehmenden Getriebe erfolgt, werden die Laufgeräusche stark reduziert.

Mit zwei Antriebseinheiten für zwei miteinander gekoppelte, einzelne Einsteller muß kein Übertragungselement und keine zusätzliche Stufe zur räumlichen Verlegung derselben vorgesehen werden. Zudem muß das lastaufnehmende Getriebe jedes Einstellers nur die Hälfte des Gesamtmoments als Blockiermoment aufnehmen, was neben dem Entfall des Übertragungselementes den konstruktiven Aufwand für diese Anforderung für jedes lastaufnehmende Getriebe deutlich reduziert.

Im folgenden ist die Erfindung anhand eines in der Zeichnung dargestellten Ausführungsbeispiels mit verschiedenen Motorvarianten, Getriebestufentypen und jeweiligen Abwandlungen hierzu näher erläutert. Es zeigen
- Fig. 1: eine Prinzipskizze des Ausführungsbeispiels,
- Fig. 2A: eine erste Motorvariante,
- Fig. 2B: eine zweite Motorvariante,
- Fig. 2C: eine dritte Motorvariante,

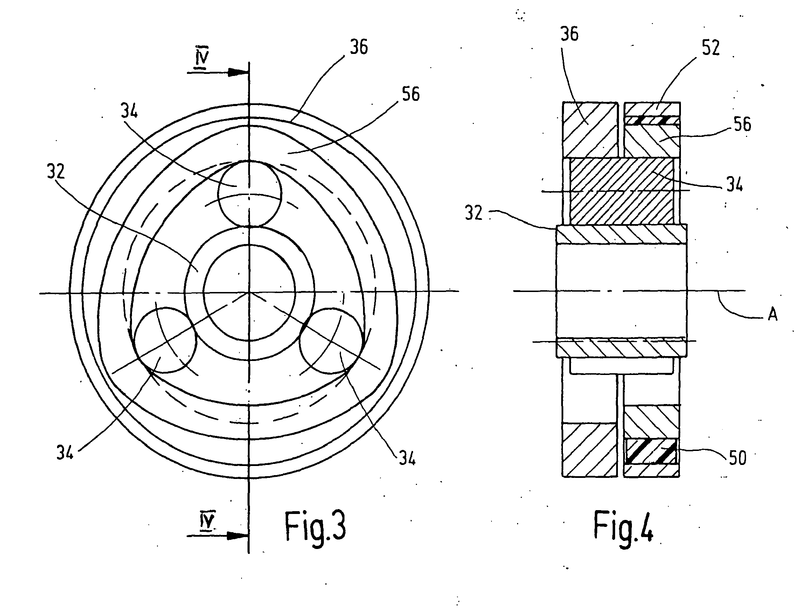

- Fig. 3: eine schematische Ansicht einer Getriebestufe, und
- Fig. 4: einen Schnitt entlang der Linie IV-IV in Fig. 3.

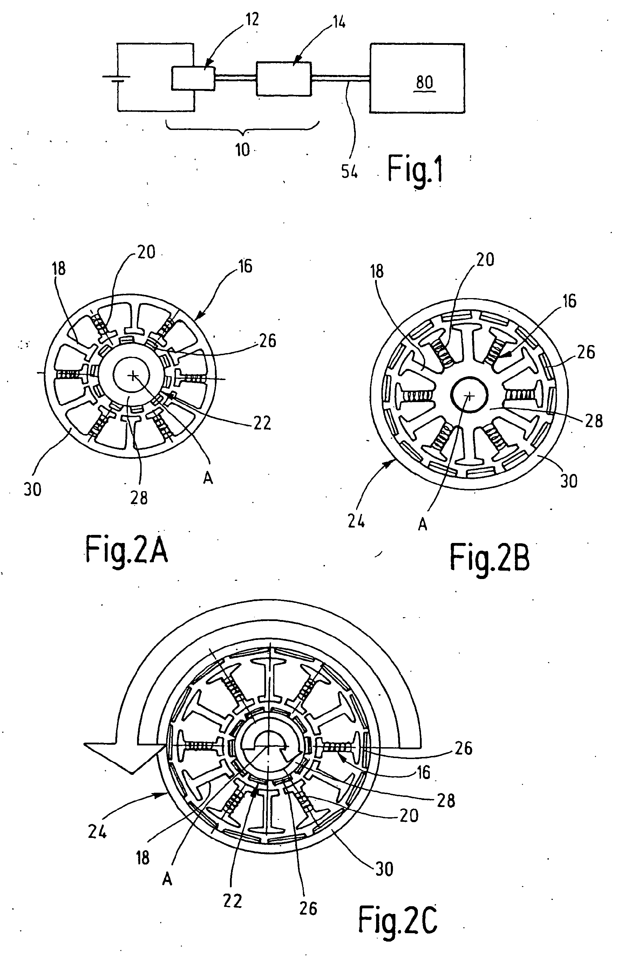

Eine Antriebseinheit 10 weist einen Motor 12 und eine abtriebsseitig vom Motor 12 vorgesehene Getriebestufe 14 auf. Der Motor 12 ist ein elektronisch kommutierter Motor mit einem Stator 16, dessen Statorpole 18 sternförmig um eine Achse A angeordnet sind. Die in Fig. 2A bis 2C senkrecht zur Zeichenebene verlaufende Achse A definiert die nachfolgenden Richtungsangaben in Zylinderkoordinaten. Auf jeden zweiten der insgesamt zwölf Statorpole 18 ist eine Spule 20 gewickelt, wobei die Spulen 20 von einer nicht näher dargestellten, in den Motor 12 integrierten, Gleichstrom gespeisten Elektronik periodisch und zeitlich versetzt zueinander bestromt werden, um ein räumlich umlaufendes Magnetfeld zu erzeugen.

In drei verschiedenen Motorvarianten ist der Motor 12 als Innenläufermotor mit einem radial innerhalb des Stators 16 angeordneten Innenrotor 22 (erste Motorvariante), als Außenläufermotor mit einem radial außerhalb des Stators 16 angeordneten Außenrotor 24 (zweite Motorvariante) oder als Doppelläufermotor, kurz Duomotor, mit einem Innenrotor 22 und einem Außenrotor 24 (dritte Motorvariante) versehen. In allen Fällen drehen sich Innenrotor 22 bzw. Außenrotor 24 um die Achse A und tragen entlang der dem Stator 16 zugewandten Umfangsfläche Permanentmagnete 26, die in Umfangsrichtung abwechselnd gepolt sind. Alle in der vorliegenden Anmeldung verwendeten Permanentmagnete 26 weisen vorzugsweise eine hohe Permeabilität auf, beispielsweise indem sie Metalle aus der Gruppe der seltenen Erden enthalten. Ein Innenrückschlußring 28, welcher bei der ersten und dritten Motorvariante dem Innenrotor 22 und bei der zweiten Motorvariante dem Stator 16 zugeordnet ist, und ein Außenrückschlußring 30, welcher bei der ersten Motorvariante dem Stator 16 und bei der zweiten und dritten Motorvariante dem Außenrotor 24 zugeordnet ist, schließen den magnetischen Fluß. Die beiden Rückschlußringe 28 und 30 können gegebenenfalls zugleich als Träger der Permanentmagneten 26 dienen. Der Außenrotor 24 liefert aufgrund der an einem größeren Radius (im Vergleich zum Innenrotor 22) wirksamen Magnetkräfte ein größeres Drehmoment. Alle drei Motorvarianten sind vorzugsweise in Hohlwellenbauweise ausgebildet, d.h. der Bereich um die Achse A ist freigelassen.

Die Anzahl der Permanentmagnete 26 ist so gewählt, dass ihr Verhältnis zur Anzahl der Statorpole 18 ungleich 2:3 oder 3:2 ist, wodurch die Rotation von Innenrotor 22 bzw. Außenrotor 24 von der Rotation des Magnetfeldes im Stator 16 abweicht. Vorliegend weist der Innenrotor 22 zehn Permanentmagnete 26 und der Außenrotor 24 vierzehn Permanentmagnete 26 auf. Entsprechend der unterschiedlichen Anzahl der Permanentmagnete 26 rotieren bei der dritten Motorvariante (Duomotor) der Innenrotor 22 und der Außenrotor 24 vorliegend mit verschiedenen Drehzahlen (5:7) und zudem in entgegengesetzte Drehrichtungen, was in der Zeichnung durch Pfeile angedeutet ist.

Statt des radialen Aufbaus des Motors kann auch ein axialer Aufbau verwirklicht sein, d.h. die Rotoren (Scheibenläufer) und der Stator sind axial hintereinander angeordnet.

Die Getriebestufe 14 dient dazu, die Drehzahl des Motors 12 zu untersetzen bei gleichzeitiger Übersetzung des vom Motor 12 abgegebenen Drehmomentes. Die Getriebestufe 14 ist als Differentialgetriebe ausgebildet. Es existiert eine Ausführung als Reibrad-Planeten-Differentialgetriebe mit zylindrischen, glatten Planetenrollen, welche - ebenso wie das Sonnenrad - hohl oder massiv sein können. Eine Hohlwellenbauweise der Getriebestufe 14, bei welcher der Bereich um die zentrale Achse A frei bleibt, ist bevorzugt.

Die Getriebestufe 14 ist ein einstufiges Planeten-Differentialgetriebe, welches in einer radial geschichteten Reibrad-Ausführung beschrieben wird, aber auch in einer Zahnrad-Ausführung möglich ist. Die Getriebestufe 14 fluchtet mit der zentralen Achse A des Motors 12. Um die Achse A herum ist ein Sonnenrad 32 angeordnet, auf dessen Umfangsfläche drei Planetenrollen 34 entlang rollen. Auf etwa der Hälfte ihrer axialen Länge werden die ungestuften Planetenrollen 34 von einem ringförmigen ersten Hohlrad 36 umschlossen, welches eine geringe Elastizität aufweist, also relativ steif ist. Auf der anderen Hälfte ihrer axialen Länge werden die Planetenrollen 34 von einem zweiten Hohlrad 56 umschlossen, welches eine höhere Elastizität und einen kleineren Innenumfang als das erste Hohlrad 36 aufweist. Beides zusammen bedingt eine von der Kreisform abweichende, durch die Anlage an den Planetenrollen 34 leicht dreieckige Form des zweiten Hohlrades 56, welche in der Zeichnung leicht übertrieben dargestellt ist und sich im Betrieb dynamisch ändert. Die Elastizitätsunterschiede werden durch eine geeignete Materialwahl erreicht.

Die beiden Hohlräder 36 und 56 sorgen für eine radiale Vorspannung mit hoher Anpresskraft und damit für ein gutes Abrollen der Planetenrollen 34 ohne Schlupf, wobei das Sonnenrad 32 die radialen Kräfte kompensiert. Bei einem Antrieb über das Sonnenrad 32 anstatt über einen Steg braucht das Verhältnis der Hohlrad-Innenumfänge für eine Übersetzung von 200 nicht 200/199 sein, sondern kann großzügiger und damit toleranzunempfindlicher gewählt werden. Zusätzlich oder anstelle des Sonnenrades 32 kann ein die Planetenrollen lagernder Steg analog dem ersten Getriebestufentyp als Antrieb oder ein die Planetenrollen fixierender Lagerkäfig vorgesehen sein. Es können in abgewandelter Ausführung auch zwei axial hintereinander angeordnete Sonnenräder unterschiedlicher Elastizität in Kombination mit einem Hohlrad oder sonstige Kombinationen von durchgehenden oder geteilten Sonnenrädern und Hohlrädern unterschiedlicher Elastizität vorgesehen sein. Die Planetenrollen können auch gestuft sein.

Um die Verformung des zweiten Hohlrades 56 auf eine starre Welle für den Abtrieb 54 zu übertragen oder alternativ gehäusefest abzustützen, wird das zweite Hohlrad 56 von einem dieses radial außen umschließenden Elastomerbett 50 aufgenommen, beispielsweise einem Gummiring, welches wiederum radial innerhalb einer Halterung 52 angeordnet ist. Das Elastomerbett 50 kann auch als weiterer Bestandteil des einen Metallring aufweisenden Hohlrades 56 angesehen werden. Anstelle des Elastomerbettes 50 können aber auch elastische Speichen für das zweite Hohlrad 56 oder ein axialer oder radialer Abgriff, gegebenenfalls unter Zwischenschaltung eines Topfes mit verformbaren Wänden oder einer Dämpferelemente aufweisenden Lochscheibe, vorgesehen sein. Die geringfügig ungleichförmige Bewegung des Hohlrades 56 wird vorzugsweise nicht oder nur geringfügig kompensiert.

Die bevorzugte Kombination der Getriebestufe 14 erfolgt mit der ersten oder zweiten Motorvariante, kann aber auch mit anderen Motorvarianten, einschließlich bürstenkommutierter Motoren, erfolgen. Das erste Hohlrad 36 wird beispielsweise gehäusefest, d.h. mit dem Stator 16 verbunden. Das als Antrieb dienende Sonnenrad 32 wird mit dem Innenrotor 22 (bzw. dem Außenrotor 24) verbunden, während das zweite Hohlrad 56 als Abtrieb 54 dient. Hierbei wird die beispielsweise als Hohlwelle ausgebildete Abtriebswelle mit einem glockenartigen Endstück am zweiten Hohlrad 56 angebracht, genauer gesagt an dessen Halterung 52. Die jeweiligen Durchmesser müssen allenfalls in den gleichen Größenordnungen sein, so dass durch die Wahl der Durchmesser eine weitere Übersetzungsmöglichkeit besteht. Vorzugsweise sind die axialen Längen von Sonnenrad 32, Planetenrollen 34 und Hohlrad 36 so groß gewählt, dass mittels der Getriebestufe 14 eine Lagerung des Innenrotors 22 und des Außenrotors 24 relativ zum Stator 16 erfolgt. Mit dem gewählten Aufbau der Getriebestufe 14 ist auch eine gesonderte Lagerung des Sonnenrades 32 und damit des Innenrotors 22 (bzw. Außenrotors 24) sowie des zweiten Hohlrades 56, d.h. des Abtriebs 54, entbehrlich, schließt sie aber nicht aus.

### Bezugszeichenliste

- 10: Antriebseinheit
- 12: Motor
- 14: Getriebestufe
- 16: Stator
- 18: Statorpol
- 20: Spule
- 22: Innenrotor
- 24: Außenrotor
- 26: Permanentmagnet
- 28: Innenrückschlußring
- 30: Außenrückschlußring
- 32: Sonnenrad
- 34: Planetenrolle
- 36: erstes Hohlrad
- 50: Elastomerbett
- 52: Halterung
- 54: Abtrieb
- 56: zweites Hohlrad
- 80: Einsteller

## Patentansprüche

1. Antriebseinheit (10) eines Einstellers (80) in einem Fahrzeug, mit wenigstens einem Motor (12) und wenigstens einer abtriebsseitig vom Motor (12) vorgesehenen, als Differentialgetriebe ausgebildeten Getriebestufe (14), **dadurch gekennzeichnet, dass** die Getriebestufe (14) unter Ausnutzung zweier unterschiedlicher Drehzahlen und/oder Drehrichtungen eine Bewegung eines Abtriebs (54) um eine Achse (A) erzeugt, wobei die Getriebestufe (14) in einer Reibrad-Ausführung als wenigstens einstufiges Planeten-Differentialgetriebe mit einem oder mehreren Sonnenrädern (32), wenigstens einem Satz hohlen und/oder massiven Planetenrollen (34) oder -rädern und einem oder mehreren Hohlrädern (36, 56) ausgebildet ist, und wobei zwei Sonnenräder (32) unterschiedliche Elastizitäten und/oder zwei Hohlräder (36, 56) unterschiedliche Elastizitäten aufweisen.

2. Antriebseinheit nach Anspruch 1, **dadurch gekennzeichnet, dass** die Getriebestufe (14) an einen Motor (12) mit einem Stator (16) und wenigstens einem mit dem Stator (16) magnetisch wechselwirkenden, um die Achse (A) rotierenden Rotor (22, 24) angeschlossen ist, wobei die Getriebestufe (14) insbesondere den Rotor (22, 24) lagert.

3. Antriebseinheit nach Anspruch 2, **dadurch gekennzeichnet, dass** das Sonnenrad (32) und das Hohlrad (36, 56) drehfest mit je einem Rotor (22, 24) des Motors (12) verbunden sind

4. Antriebseinheit nach einem der Ansprüche 1 bis 2, **dadurch gekennzeichnet, dass** zwei Sonnenräder (32) oder zwei Hohlräder (36, 56) bezüglich der Achse (A) axial benachbart angeordnet sind.

5. Antriebseinheit nach einem der Ansprüche 1 bis 4, **dadurch gekennzeichnet, dass** zwei Sonnenräder (32) unterschiedliche Außendurchmesser oder Außenumfänge und/oder zwei Hohlräder (36, 56) unterschiedliche Innenumfänge aufweisen.

6. Antriebseinheit nach einem der Ansprüche 1 bis 5, **dadurch gekennzeichnet, dass** von den zwei benachbarten Getriebeelementen mit unterschiedlicher Elastizität oder Innenumfang eines gehäusefest ist und eines mit dem Abtrieb (54) verbunden ist oder diesen bildet.

7. Antriebseinheit nach Anspruch 2 und 6, **dadurch gekennzeichnet, dass** das Sonnenrad (32) drehfest mit einem Rotor (22, 24) des Motors (12) verbunden ist; ein Hohlrad (36) mit dem Stator (16) in Verbindung steht und ein Hohlrad (56) mit dem Abtrieb (54) verbunden ist oder diesen bildet.

8. Antriebseinheit nach einem der Ansprüche 1 bis 7, **dadurch gekennzeichnet, dass** das Hohlrad (56) von einem dieses radial außen umschließenden Elastomerbett (50) aufgenommen wird.

9. Antriebseinheit nach einem der Ansprüche 1 bis 8, **dadurch gekennzeichnet, dass** die Planetenrollen (34) oder -räder ungestuft ausgebildet sind.

## Claims

1. A drive unit (10) of an adjuster (80) in a vehicle, having at least one motor (12) and at least one gear stage (14) provided on the output side of the motor (12) and designed as a differential gear, **characterized in that** the gear stage (14) by making use of two different speeds and/or directions of rotation causes a movement of an output (54) around a shaft (A), wherein the gear stage (14) is designed, in a friction wheel configuration, as an at least single-stage planetary differential gear having one or more sun gears (32), at least one set of hollow and/or solid planet rollers (34) or gears and one or more hollow gears (36, 56), wherein two sun gears (32) have different elasticities and/or two two hollow gears (36, 56) have different elasticities.

2. A drive unit according to claim 1, **characterized in that** the gear stage (14) is connected to a motor (12) comprises a stator (16) and at least one rotor (22, 24) rotating around an axis (A) and interacting magnetically with the stator (16), wherein the gear stage (14) particularly bears the rotor (22, 24).

3. A drive unit according to claim 2, **characterized in that** the sun wheel (32) and the hollow gear (36) are rotationally rigidly connected each to one rotor (22, 24) of the motor (12).

4. A drive unit according to one of the claims 1 to 2, **characterized in that** two sun gears (32) or two hollow gears (36, 56) are axially adjacently arranged with respect to the axis (A).

5. A drive unit according to one of the claims 1 to 4, **characterized in that** two sun gears (32) have different outer diameters or outer circumferences and/or two hollow gears (36, 56) have different inner circumferences.

6. A drive unit according to one of the claims 1 to 5, **characterized in that** one of the two adjacent gear elements having different elasticities or inner circumferences is attached to the housing and one of them is connected with the output (54) or forms the latter.

7. A drive unit according to claims 2 and 6, **characterized in that** the sun gear (32) is rigidly connected to a rotor (22, 24) of the motor (12), one hollow gear (36) is connected to the stator (16), and one hollow gear (56) is connected with the output (54) or forms the latter.

8. A drive unit according to one of the claims 1 to 7, **characterized in that** the hollow gear (56) is received by an elastomer bed (50) which encloses it radially on the outside.

9. A drive unit according to one of the claims 1 to 8, **characterized in that** the planet rollers (34) or gears (34') are unstepped.

## Revendications

1. Unité d'entraînement (10) d'un dispositif de réglage (80) dans un véhicule, comportant au moins un moteur (12) et au moins un étage d'engrenage (14) disposé du côté sortie du moteur (12), réalisé sous la forme d'un engrenage différentiel, **caractérisée par le fait que** l'étage d'engrenage (14) génère, lors de l'utilisation de deux vitesses de rotation et/ou sens de rotation différents un mouvement d'une sortie (54) autour d'un axe (A), l'étage d'engrenage (14) étant réalisé dans une réalisation de roue de friction comme au moins un engrenage différentiel planétaire à un étage avec une ou plusieurs roues solaires (32), au moins un ensemble de rouleaux planétaires (34) creux ou massifs ou roues planétaires creuses et/ou massives et une ou plusieurs roues à denture intérieure (36, 56), et deux roues solaires (32) présentant des élasticités différentes et/ou deux roues à denture intérieure (36, 56) présentant des élasticités différentes.

2. Unité d'entraînement selon la revendication 1, **caractérisée par le fait que** l'étage d'engrenage (14) est raccordé à un moteur (12) avec un stator (16) et au moins un rotor (22, 24) tournant autour de l'axe (A), interagissant magnétiquement avec le stator (16), l'étage d'engrenage (14) logeant en particulier le rotor (22, 24).

3. Unité d'entraînement selon la revendication 2, **caractérisée par le fait que** la roue solaire (32) et la roue à denture intérieure (36, 56) sont reliées de façon solidaire en rotation avec respectivement un rotor (22, 24) du moteur (12).

4. Unité d'entraînement selon l'une des revendications 1 et 2, **caractérisée par le fait que** deux roues solaires (32) ou deux roues à denture intérieure (36, 56) sont disposées en étant axialement voisines par rapport à l'axe (A).

5. Unité d'entraînement selon l'une des revendications 1 à 4, **caractérisée par le fait que** deux roues solaires (32) présentent des diamètres externes différents ou des circonférences externes différentes et/ou deux roues à denture intérieure (36, 56) présentent des circonférences internes différentes.

6. Unité d'entraînement selon l'une des revendications 1 à 5, **caractérisée par le fait que** parmi les deux éléments d'entraînement voisins avec une élasticité différente ou une périphérie interne différente, l'un est solidaire du carter et l'autre est relié à la sortie (54) ou forme celle-ci.

7. Unité d'entraînement selon l'une des revendications 2 et 6, **caractérisée par le fait que** la roue solaire (32) est reliée de façon solidaire en rotation avec un rotor (22, 24) du moteur (12) ; une roue à denture intérieure (36) est en liaison avec le stator (16) et une roue à denture intérieure (56) est reliée avec la sortie (54) ou forme celle-ci.

8. Unité d'entraînement selon l'une des revendications 1 à 7, **caractérisée par le fait que** la roue à denture intérieure (56) est tenue par un lit élastomère (50) enfermant extérieurement radialement celle-ci.

9. Unité d'entraînement selon l'une des revendications 1 à 8, **caractérisée par le fait que** les rouleaux (34) ou roues planétaires sont réalisés sans étage.
